# EUROPEAN PATENT APPLICATION

(11) **EP 2 390 710 A1**
(43) Date of publication of application: **30.11.2011**
(21) Application number: 10733372.6
(22) Date of filing: 22.01.2010
(51) Int. Cl.: G02C 5/16, G02C 5/22

(54) **ROTATION MECHANISM FOR EYEGLASSES AND EYEGLASSES HAVING THE SAME**

(30) Priority: 23.01.2009 JP 2009013709
(71) Applicant: Charmant Co., Ltd., Sabae-shi, Fukui, 916-0088 (JP)
(72) Inventor: TADA, Hiroyuki, Sabae-shi Fukui 916-0088 (JP); YAMAMOTO, Katsumi, Sabae-shi Fukui 916-0088 (JP)
(74) Representative: Goddar, Heinz J.
(86) International application number: PCT/JP2010/000366
(87) International publication number: WO 2010/084764

(57) **Abstract**

[Problem to be Solved]

To provide a pivot structure of eyeglasses that is reduced as little as possible in pivotal resistance even for long-term use, and eyeglasses provided with the pivot structure thereof.

[Solution]

The pivot structure in eyeglasses includes a first base member 1, a second base member 2, and a pillar member 3 interposed between the first base member 1 and the second base member 2, and a twisting action of the pillar member 3 makes the second base member 2 capable of pivoting on the first base member 1. Further, in the pivot structure, the pillar member 3 and the first base member 1 are fixed by a first fixed portion 4, the pillar member 3 and the second base member 2 are fixed by a second fixed portion 5, and a certain distance in the direction of the pillar axis is placed between the first fixed portion 4 and the second fixed portion 5.

## Description

### Technical Field

The present invention relates to a pivot structure excellent in spring property, and eyeglasses provided with the pivot structure.

### Background Art

Conventionally, as a pivot structure that a temple is pivotally attached to a bracket via a joining member, various pivot structures using a joining screw are known in eyeglasses (for example, see a patent document 1).

In pivot structures using a screw, however, the screw is progressively loosened to come off by vibrations or the like for a long-term wearing of the eyeglasses.
Alternatively, since fastening force of the screw varies significantly with slightly-different amounts of screwing, a difference in pivotal resistance between right and left temples, or a difference in pivotal resistance of the temples between products occurs.
This causes a wearer of the eyeglasses to feel discomfort.
In view of these circumstances, various pivot structures of glasses which do not use a screw have been developed.

As the structure which does not use a screw, a pivot structure using the elasticity of a temple, for example, one in which a middle portion of a temple is caught by an engaging portion integrated with a bracket so as to give elasticity at an overextension time is known (for example, see a patent document 2).

### Prior Art Documents

### Patent Documents

Patent Document 1: Japanese Patent Application Laid-Open Publication No. 08-5965
Patent Document 2: Japanese Unexamined Patent Application Publication No. 2001-249308

### Summary of the Invention

### Problem to be solved by the Invention

In the typical pivot structure of eyeglasses described representatively in the patent document 2 or the like, however, since a restoring force due to bending of the temple is used, there is the problem that repeatedly pivoting the temple for use causes progressive reduction in pivotal resistance.
Further, reduction in pivotal resistance causes backlash of the temple itself.

The present invention has been developed in order to solve the above problem.
That is, an object of the present invention is to provide a pivot structure of eyeglasses that is not reduced as little as possible in pivot resistance even for long-term use, and eyeglasses provided with the pivot structure.

### Means for Solving the Problems

As a result of accumulated intensive studies based on such a problem as described above, the present inventors have found that the above problem can be solved not by using the elasticity of a temple itself but by utilizing torsion of a pillar member which is a part independent of a temple, and has completed the present invention based upon the finding.

That is, the present invention lies in (1) a pivot structure in eyeglasses, comprising a first base member, a second base member, and a pillar member interposed between the first base member and the second base member, wherein a twisting action of the pillar member makes the second base member capable of pivoting on the first base member.

Further, the present invention lies in (2) the pivot structure according to the above (1), wherein the pillar member and the first base member are fixed by a first fixed portion, the pillar member and the second base member are fixed by a second fixed portion, and a certain distance in the direction of the pillar axis is placed between the first fixed portion and the second fixed portion.

Further, the present invention lies in (3) the pivot structure according to the above (2), wherein the first fixed portion is divided into two, and the second fixed portion is fixed between the divided first fixed portions.

Further, the present invention lies in (4) the pivot structure according to the above (1), wherein the first fixed portion and the second fixed portion are fixed to the pillar member by a securing part.

Further, the present invention lies in (5) the pivot structure according to the above (1), wherein the pillar member is inserted in the first base member, the second base member is fixed to one end face of the pillar member, one end of a stopper portion is fixed to the other end face of the pillar member, and the other end of the stopper portion is capable of abutting on a protrusion formed on the first base member.

Further, the present invention lies in (6) the pivot structure according to the above (3), wherein the pillar member is curved.

Further, the present invention lies in (7) the pivot structure according to the above (1), wherein the pillar member has a cylindrical shape.

Further, the present invention lies in (8) the pivot structure according to the above (1), wherein the first base member is a bracket, and the second base member is a temple.

Further, the present invention lies in (9) the pivot structure according to the above (1), wherein the pillar member is a metal member.

Further, the present invention lies in (10) the pivot structure according to the above (9), wherein the composition of the metal member is (A) 40 to 75 % by weight of Ti, (B) 18 to 30 % by weight of Nb, (C) 10 to 30 % by weight of Zr, and (D) 0.2 to 3.7 % by weight of at least one metal additive element selected from a group consisting of Al, Sn, In, and Ga.

Further, the present invention lies in (11) eyeglasses provided with the pivot structure according to any one of the above (1) to (10).

Further, the present invention lies in (12) eyeglasses provided with a plurality of the pivot structures according to any one of the above (1) to (10).

Note that a configuration obtained by combining the above inventions as necessary can also be adopted as long as it fulfills the object of the present invention.

### Effects of the Invention

In the pivot structure of eyeglasses of the present invention, since the first base member and the second base member are fixed via the pillar member, and the first fixed portion that is a fixed portion between the first base member and the pillar member and the second fixed portion that is a fixed portion between the second base member and the pillar member are formed so as to be separated by a certain distance in the direction of the pillar axis, pivoting the second base member causes a twisting deformation of the pillar member.
The twisting deformation caused at this time is followed by an action of a backward force, so that the deformation of the pillar member is corrected, and simultaneously the second base member is also restored to its original state.

That is, in the pivot structure of the present invention, the pillar member serves as a spring to realize elastic pivoting of the second base member.
Since the twisting deformation within the elastic limit of the pillar member is utilized, pivotal resistance is not easily reduced even by repetitive pivoting operation, so that the eyeglasses can be kept given a constant magnitude of tightening force.

In the case where the first fixed portion is divided into two, and the second fixed portion is fixed between the divided first fixed portions, even if the eyeglasses are repeatedly used, since there are two first fixed members, a gap is not easily caused between the pillar member and the first base member, or unsteady pivoting is not easily caused, either.
Further, since the distance between the first fixed portion and the second fixed portion becomes small, elastic force due to torsion increases.

In the case where the pillar member is inserted in the first base member, the second base member is fixed to one end face of the pillar member, one end of a stopper portion formed integrally with the first base member is fixed to the other end face of the pillar member, and a protrusion formed on the first base member is caused to support the other end of the stopper portion, when the second base member is caused to pivot excessively, the pillar member is twisted to generate a restoring force.

In the case where the material of the pillar member is a metal whose composition is (A) 40 to 75 % by weight of Ti, (B) 18 to 30 % by weight of Nb, (C) 10 to 30 % by weight of Zr, and (D) 0.2 to 3.7 % by weight of at least one metal additive element selected from a group consisting of Al, Sn, In, and Ga, the elastic limit of the pillar member increases, so that the range of motion of the second base member is extended.

In the case where a plurality of the pivot structures are joined, the total of all pivotal ranges of the pivot structures is the pivotal range of the whole pivot structures, so that a large pivotal range can be obtained even if a pillar member having a low elastic limit is used.

### Brief Description of the Drawings

FIG. 1 is a perspective view of whole eyeglasses provided with a pivot structure of a first embodiment;
FIGS. 2(A) and 2(B) are explanatory views showing the pivot structure of the first embodiment, FIG. 2(A) being a plan view, FIG. 2(B) being a side view;
FIGS. 3(A) and 3(B) are explanatory views showing a motion of the pivot structure of the first embodiment, FIG. 3(A) being a plan view, FIG. 3(B) being a view showing a twisted state of a pillar member when a second base member has pivoted;
FIGS. 4(A) and 4(B) are perspective views showing a motion of the pivot structure of the first embodiment, FIG: 4(A) showing before pivoting, FIG. 4(B) showing after pivoting;
FIG. 5 is an explanatory view showing a specific example of fixing the pillar member to base members with a securing part;
FIGS. 6(A) and 6(B) are explanatory views showing a pivot structure of a second embodiment, FIG. 6(A) being a plan view, FIG. 6(B) being a side view;
FIG. 7 is an explanatory view showing a twisted state of a pillar member in the pivot structure of the second embodiment;
FIGS. 8(A) and 8(B) are explanatory views showing the pivot structure of the second embodiment, FIG. 8(A) being a plan view, FIG. 8(B) being a side view;
FIG. 9 is a view showing a specific modification in which a first base member and a second base member have different shapes;
FIG. 10 is a view showing another specific modification in which a first base member and a second base member have different shapes;
FIG. 11 is a view showing one example of eyeglasses having a plurality of pivot structures in a temple:
FIGS. 12(A) and 12(B) are explanatory views showing a pivot structure of a fourth embodiment, FIG. 12(A) showing before pivoting, FIG. 12(B) showing after pivoting;
FIGS. 13(A) and 13(B) are explanatory views showing an example of a pivot structure provided with a stopper function, FIG. 13(A) being before pivoting, FIG. 13(B) being after pivoting;
FIGS. 14 (A) and 14(B) are explanatory views showing another example of a pivot structure provided with a stopper function, FIG. 14(A) being before pivoting, FIG. 14(B) being after pivoting;
FIG. 15 is an explanatory view showing a pivot structure of a fifth embodiment in a partial section;
FIG. 16 is a specific example showing a pivot structure having a curved pillar member; and
FIGS. 17(A) and 17(B) are views showing another example of eyeglasses having a plurality of pivot structures in a temple, FIG. 17(A) and FIG. 17(B) showing examples having different fixed portions.

### Embodiments for carrying out the Invention

With reference to the drawings as needed, preferred embodiments of the present invention will be described below in detail.
Note that in the drawings identical elements are denoted by identical references so as not to be described repeatedly.
Further, unless otherwise noted, such a positional relationship, as top, bottom, right and left, is based on the drawings, and the dimensional ratios on the drawings are not limited to those graphically illustrated.

### (First Embodiment)

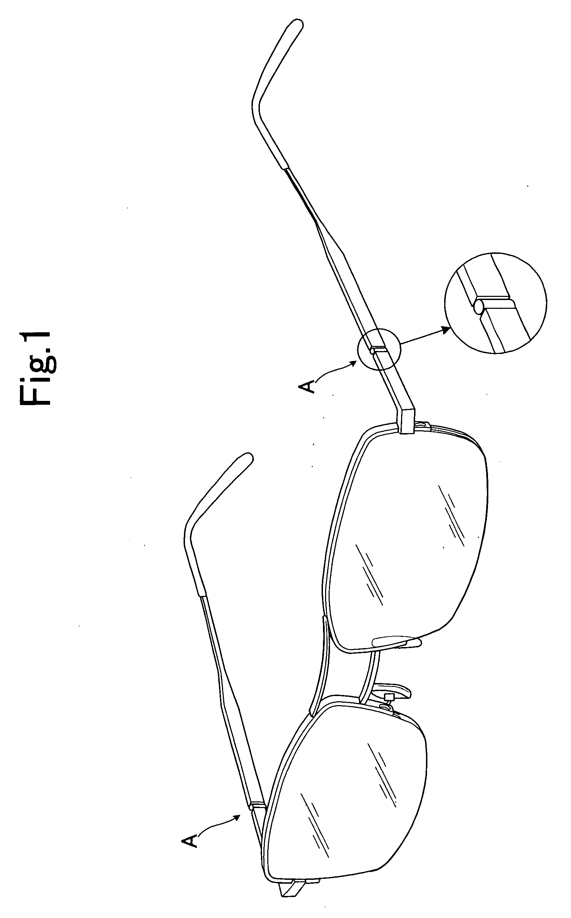

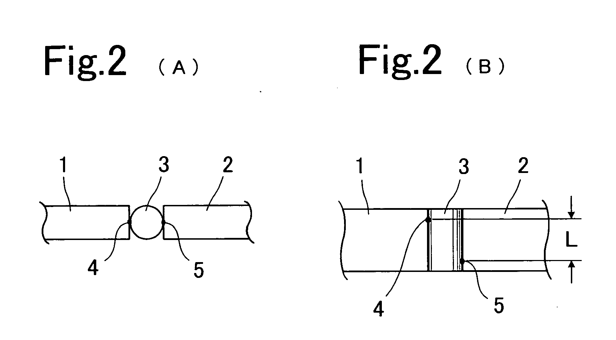

FIG. 1 is an appearance view showing eyeglasses provided with a pivot structure of this embodiment.
Further, FIGS. 2(A) and 2(B) are enlarged views describing the pivot structure of this embodiment.

A pivot structure A of this embodiment includes a first base member 1 (bracket) attached to a lens portion of eyeglasses, a second base member 2 (temple) that abuts on a temporal region of the head of a wearer of the eyeglasses so as to apply tightening force thereto, and a cylindrical pillar member 3, and the periphery of the pillar member 3 disposed in parallel with the first base member 1 and the second base member 2 is fixed to an end face of the first base member 1 and to an end face of the second base member 2.
The pillar member 3 has twisting elasticity
Note that a fixed portion is expressed by a dot for convenience.

That is, as shown in FIG. 2(B), the pillar member 3 is fixed to the first base member 1 only at an upper-end point of an abutting portion on the end face of the first base member 1, and similarly, the pillar member 3 is fixed to the second base member 2 only at a lower-end point of an abutting portion on the end face of the second base member 2.

Further, at this time, a first fixed portion 4 that is a fixed portion between the pillar member 3 and the first base member 1 and a second fixed portion 5 that is a fixed portion between the pillar member 3 and the second base member 2 are formed so as to be separated by a certain distance L in the direction of the pillar axis.

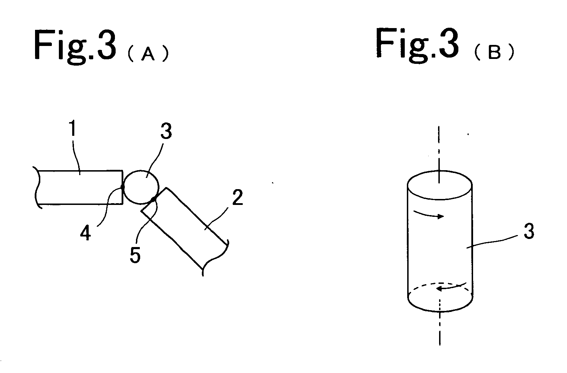

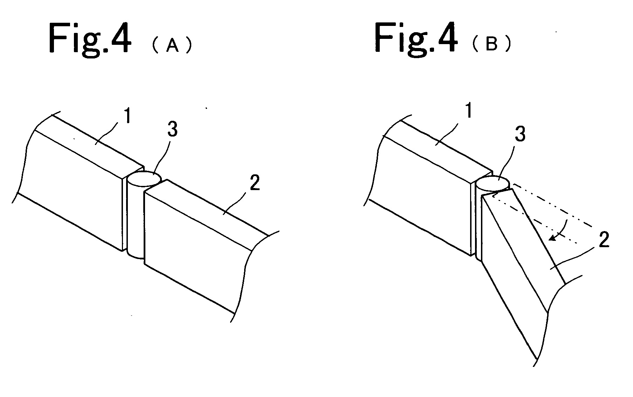

In the pivot structure A with the pillar member 3 fixed to the first base member 1 and the second base member 2 in this manner, when a pressing force (pivoting torque) is applied to the second base member 2 so as to be extended against the first base member 1 from a normal state shown in FIG. 4(A), the second base member 2 pivots about a pillar axis, as shown in FIGS. 3(A) and 4(B).

This is because, when a turning force is applied to the second base member 2 to cause the second base member 2 to pivot, as shown by arrows in FIG. 3(B), torsion relatively occurs in the pillar member 3, and the second fixed portion 5 undergoes a twisting deformation about the pillar axis of the pillar member 3 against the first fixed portion 4, as shown by the arrows in FIG. 3(B).

Since the magnitude of twisting stress applied to the pillar member 3 at this time is within the elastic limit, when the stress is removed from the second base member 2, the pillar member 3 is untwisted so that the pillar member 3 is restored to an original state before twisted.
By fixing the first base member 1 and the second base member 2 via the pillar member 3, and forming the first fixed portion 4 and the second fixed portion 5 so as to be separated by a certain distance in the direction of the pillar axis in this manner, a twisting action of the pillar member 3 associated with pivoting of the second base member 2 can be utilized as a restoring force of the second base member 2.

The materials of the first base member 1, the second base member 2, and the pillar member 3 are not particularly limited, but metal is preferred in view of strength or the like.
In particular, regarding the pillar member 3, since a higher elastic limit can expand the pivotal range of the second base member 2, it is preferred that a Ti spring alloy having a high elastic limit be used, the composition of which includes 40 to 75 % by weight of Ti, 18 to 30 % by weight of Nb, 10 to 30 % by weight of Zr, and 0.2 to 3.7 % by weight of at least one metal additive element selected from a group consisting of Al, Sn, In, and Ga.
Next, for reference, "torque - twisting angle" characteristics of a Ti spring alloy used in this invention (53.4 % by weight of Ti, 23 % by weight of Nb, 22 % by weight of Zr, and 1.6 % by weight Of Al) and an ordinary Ti spring alloy (76 % by weight of Ti, 15 % by weight of V, 3 % by weight of Al, 3 % by weight Cr, and 3 % by weight of Sn) (cylindrical pillars having a diameter of 1 mm and a length of 20 mm) are as follows.

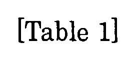

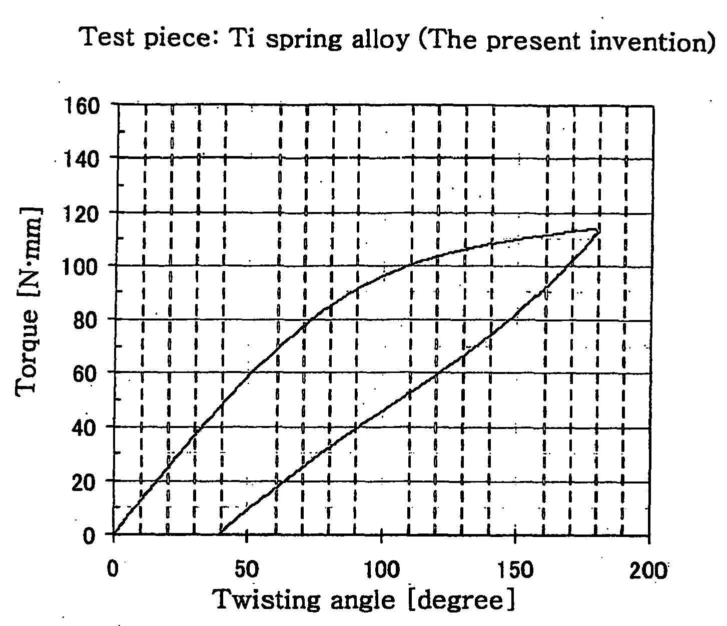

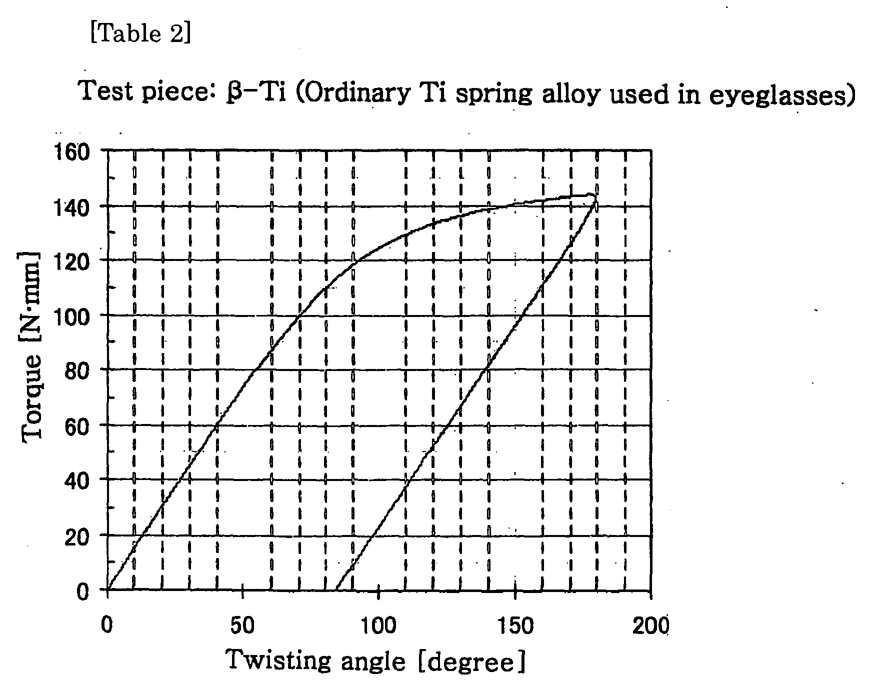

That is, as shown in Tables 1 and 2, it will be understood that the Ti spring alloy of the present invention can obtain a larger twisting angle with a smaller torque than the ordinary Ti spring alloy, and residual strain after unloading is smaller in amount.

A method of fixing between the first base member 1 and the pillar member 3 and a method of fixing between the second base member 2 and the pillar member 3 are not particularly limited, and, for example, it is possible to adopt brazing, bonding performed by an adhesive agent, fastening performed by a securing part, or the like.
In a case where the materials of the first base member 1, the second base member 2, and the pillar member 3 are metal, it is preferred that laser welding be used in order to fix each member so as to be blunted as little as possible.

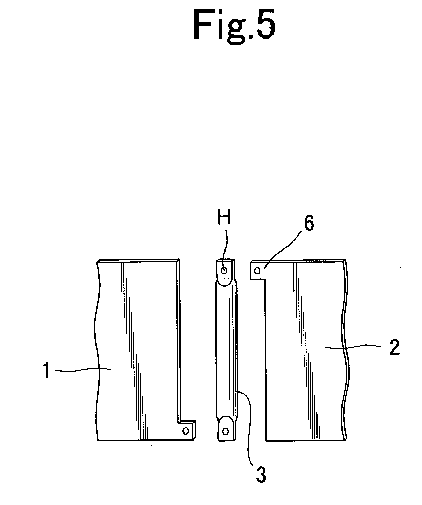

Further, in the case that the pillar member 3 is fixed to each base member by the securing part, for example, as specifically shown in FIG. 5, such a manner that upper and lower end portions of the pillar member 3 are partially flattened by cutting, or flattened by pressing, and small openings H are formed therein, and protruded portions 6 with a small opening are formed as so to be extended from side faces of the first base member 1 and the second base member 2 can be adopted.
Then, by fastening the end portions of the pillar member 3 and the protruded portions 6 by securing part, such as a screw or a rivet, the pillar member 3 is fixed to the first base member 1 and the second base member 2.

Note that even one protruded portion 6 is provided with a function of fixing the pillar member, but, in order to fix the pillar member 3 more securely, it is preferred that protruded portions 6 are provided so as to be extended from both side faces (that is, front and back) of the base member so that the end portion of the pillar member 3 is fixed so as to be sandwiched by two protruded portions 6.
Obviously, in a case where the first base member 1 and the second base member 2 are metal, they can be reliably fixed to the pillar member 3 by welding.

### (Second Embodiment)

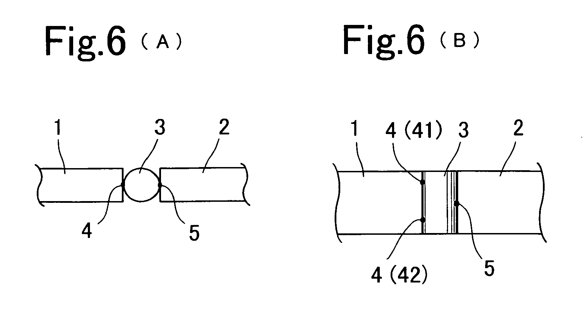

In the pivot structure A of this embodiment, as shown in FIG. 6 (B), a plurality of first fixed portions 4 (two in the figure) of the end face of the first base member 1 are formed; and the second fixed portion 5 of the end face of the second base member 2 is formed between the two first fixed portions.
Since the plurality of the first fixed portions 4 are formed and the second fixed portion 5 is formed therebetween in this manner, the strength of the pivot structure A increases.
As a result, even if the pivoting operation of the second base member 2 is repeatedly performed, for example, a gap is not easily caused between the pillar member 3 and the first base member 1, or unsteady pivoting is not easily caused, either.
Further, since the separation distance between the first fixed portion and the second fixed portion is reduced, elastic force due to torsion increases.

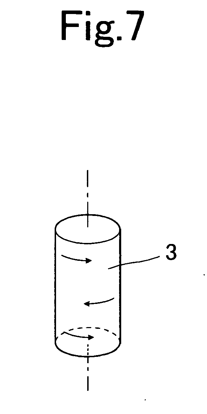

Note that in this embodiment the pillar member 3 undergoes such twisting deformations as shown in FIG. 7, in directions indicated by arrows relative to an upper first fixed portion 41, a lower first fixed portion 42, and the second fixed portion 5.
The number of first fixed portions 4 and second fixed portions 5 to be formed is not particularly limited as long as the principle of the present invention is used, but it can be set optionally according to the sizes of the pillar member 3, the first base member 1, and the second base member 2.

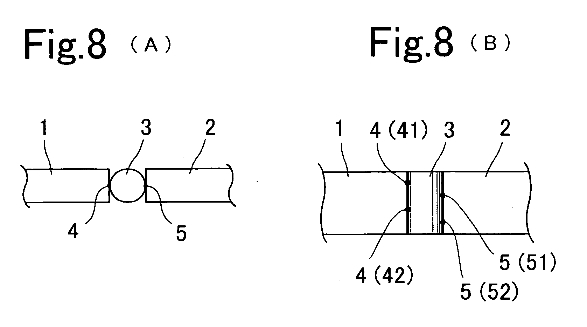

Here, FIG. 8 (B) shows the pivot structure A in which a plurality of first fixed portions 4 and a plurality of second fixed portions 5 are alternately provided.
A second fixed portion 51 is provided between the upper first fixed portion 41 and the lower first fixed portion 42, and a second fixed portion 52 is further provided below the second fixed portion 51.
In this case, since the fixing between the second base member 2 and the pillar member 3 becomes strong, a gap is not easily generated therebetween, so that the motion of the pivot structure A becomes stable.

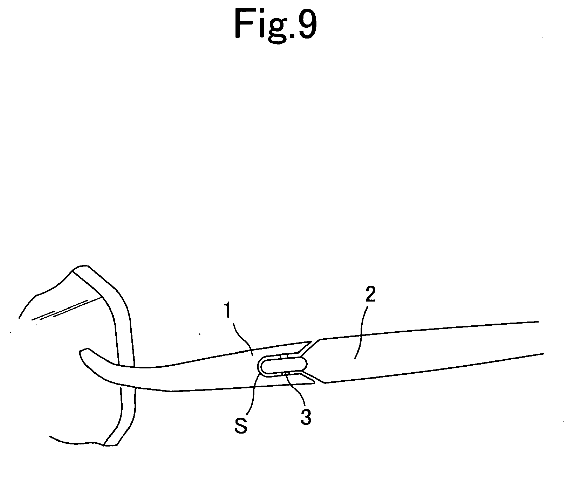

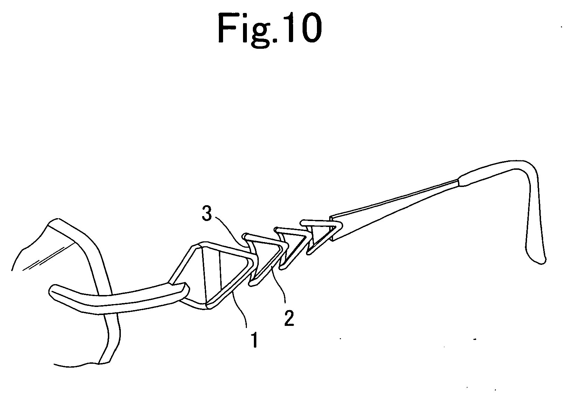

In the present invention, the shapes or the like of the first base member 1 and the second base member 2 are not particularly limited, and, for example, as shown in FIG. 9 as a specific example, it is possible to dispose the pillar member 3 in a notched portion formed in the first base member 1, or, as shown in FIG. 10, it is also possible to form the first base member 1 and the second base member 2 into V-shaped frames.
In the case shown in FIG. 9, with a narrow width portion of the second base member 2 inserted in a notched portion S of the first base member 1, the upper and lower ends of the pillar member 3 inserted in the narrow width portion are fixed to the first base member 1, and a middle portion of the pillar member 3 is fixed to the second base member 2.

### (Third Embodiment)

A pivot structure of this embodiment is an example of eyeglasses having a plurality of pivot structures described above, for example, a temple of the eyeglasses is provided with connection of a plurality of pivot structures shown in FIGS. 2(A) and 2(B) or FIGS. 6(A) and 6(B).

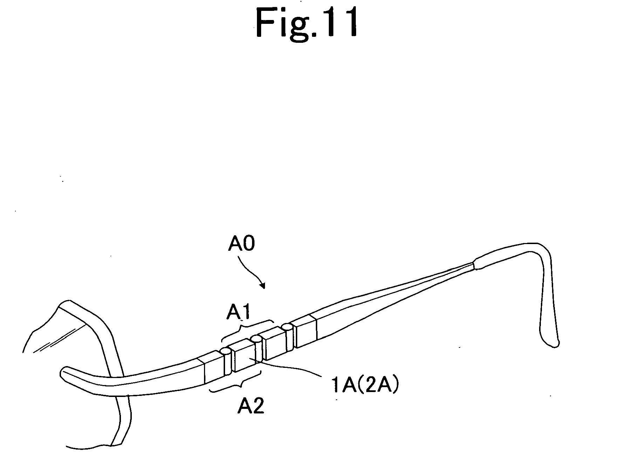

As shown in FIG. 11, in a pivot structure A0 of this embodiment, a first base member 1A of a pivot structure A2 serves as a second base member 2A of a pivot structure A2 formed adjacent to the pivot structure A1, so that the pivot structures of the present invention can be continuously joined one after another.
In the pivot structure A0, the respective pivot structures pivot independently.
That is, the total of the respective pivotal ranges (pivotal regions) of the pivot structures becomes the pivotal range of the pivot structure A0.
As a result, the curve of a temple that is the second base member 2 can be set to be larger, and further whip can be made soft as a whole.

### (Fourth Embodiment)

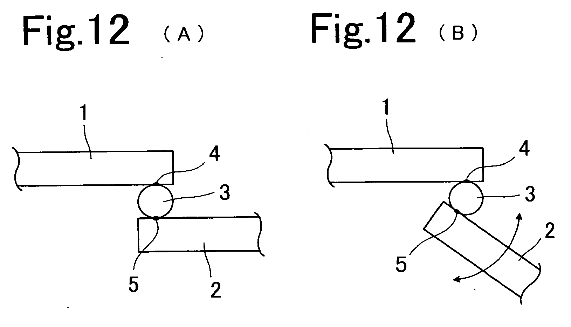

Now, through the pillar member 3 is fixed to the end faces of the first base member 1 and the second base member 2 in the pivot structure shown in FIGS. 2(A) and 2(B) or FIGS. 6(A) and 6(B), a pivot structure A shown in FIGS. 12(A) and 12(B) is explanatory views of a modification in which the positions of the fixed portions have been changed.
As shown in FIGS. 12(A) and 12(B), the pillar member 3 is fixed to not the end faces but side faces of the first base member 1 and the second base member 2.

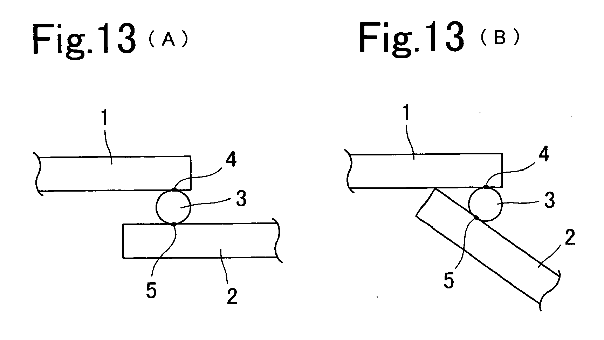

Also in this case, the pillar member 3 generates a twisting restoring force according to pivoting of the second base member 2 [FIG. 12(A) → 12(B)].
Here, in a case where the fixed portion 5 between the pillar member 3 and the second base member 2 is disposed inside beyond the end face of the second base member 2, as shown in FIGS. 13(A) and 13(B), when the second base member 2 is pivoted, the end face abuts on the first base member 1 [FIG. 13(A) → 13(B)].
This can be utilized to limit the pivotal angle of the second base member 2.

Note that, also in this embodiment, the first fixed portion 4 may be formed at the upper end portion of the pillar member 3, and the second fixed portion 5 may be formed at the lower end portion of the pillar member 3, or the first fixed portions 4 may be formed at two spots, and the second fixed portion 5 may be formed at one spot therebetween.
Since the pivot structure A is configured in this manner, when the second base member 2 is caused to pivot, the end portion of the second base member 2 abuts on the first base member 1 so as to function as a stopper to prevent further pivoting.
Since the stopper function is given to the pivot structure A, the second base member 2, that is, a temple, is not caused to pivot excessively beyond range of motion.

### (Fifth Embodiment)

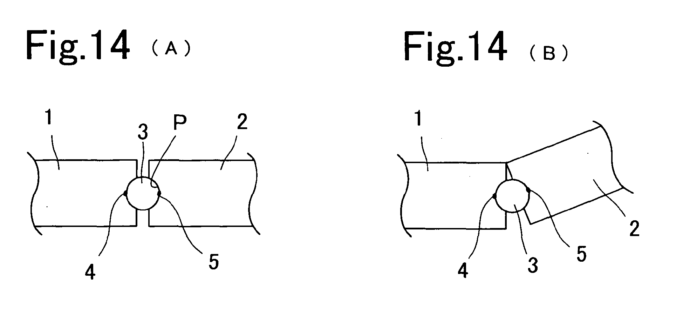

FIGS. 14(A) and FIG. 14(B) show another example of the pivot structure A given a stopper function.
The first base member 1 and the second base member 2 are provided with recesses P, and the pillar member 3 is disposed in the recesses P so as to be fixed.
Regarding the fixed portions 4 and 5 in the direction of the pillar axis, the positions as shown in FIGS. 2(A) and 2(B), or FIGS. 6(A) and 6(B) can be adopted.
When the second base member 2 is caused to pivot, the end portion of the second base member 2 abuts on the end portion of the first base member 1, and is blocked from further pivoting [FIG. 14(A) → 14(B)].

### (Sixth Embodiment)

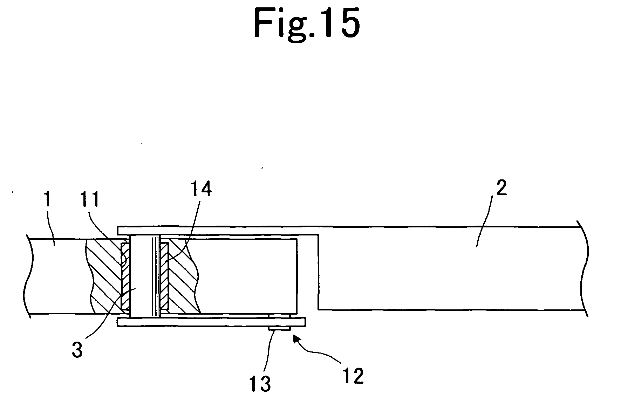

FIG. 15 is an explanatory view showing a pivot structure of a sixth embodiment in a partial section.
In the pivot structure A of this embodiment, the pillar member 3 is inserted in a through-hole 11 formed in the first base member 1, and one end face of the pillar member 3 is fixed to the second base member 2.
The other end face of the pillar member 3 is fixed to one end of a stopper portion 12.
Further, the other end of the stopper portion 12 is capable of abutting on a protrusion 13 formed on the first base member 1.
When a pivotal force is applied to the second base member 2 (downward vertically to a sheet plane in FIG. 15), the stopper portion 12 abuts on the protrusion 13, and the pillar member 3 is twisted to generate a restoring force.

A cylindrical sleeve 14 made of synthetic resin is fitted in the through-hole 11 of the first base member 1, and abuts on the periphery of the pillar member 3.
This cylindrical sleeve 14 increases frictional force generated between the pillar member 3 and the through-hole 11, and gives pivotal resistance to the second base member 2 before a stage where the stopper portion 12 abuts on the protrusion 13.

### (Seventh Embodiment)

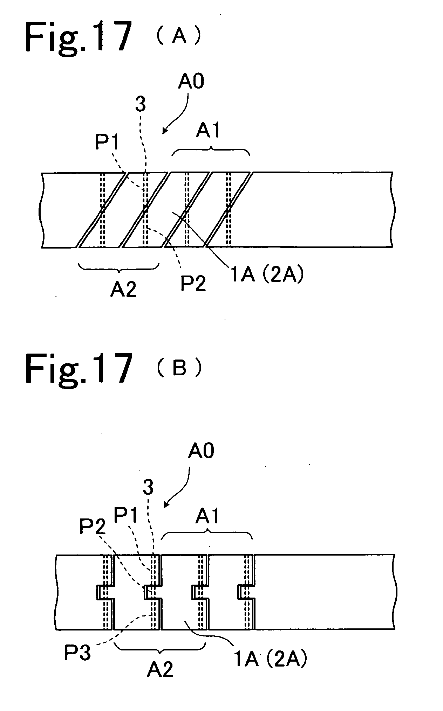

FIGS. 17(A) and 17(B) are explanatory views of other examples of eyeglasses having a plurality of pivot structures in a temple.
In a pivot structure in FIG. 17(A), the pillar member 3 is fixed to different base members at a fixed portion P1 and a fixed portion P2.
In a pivot structure in FIG. 17(B), the pillar member 3 is fixed to one base member at the fixed portion P1 and the fixed portion P2, and fixed to the other base member at a fixed portion P2.
In the pivot structure A0 of this embodiment, the first base member 1A of the pivot structure A1 serves as the second base member 2A of the pivot structure A2 formed adjacent to the pivot structure A1, so that the pivot structures of the present invention can be continuously joined one after another.
In the pivot structure A0, the respective pivot structures pivot individually.
That is, as in the case of the pivot structure in FIG. 11, the total of the respective pivotal ranges (pivotal regions) of the pivot structures becomes the pivotal range of the pivot structure A0.
As understood from the examples in FIGS. 17(A) and 17(B), various modifications can be made by changing the fixing position between the pillar member 3 and the base member, the number of pillar members 3 and base members, or the like.

The present invention has been described above with reference to its embodiments, but the present invention is not limited to the above embodiments, and can be modified variously.
For example, in the above embodiments, the first base member corresponds to a bracket, and the second base member corresponds to a temple, but the first base member may be a member attached to a bracket.
Also, the second base member may be a member attached to a temple.

Further, in the present invention, since there is no difference in function between the first base member and the second base member, the second base member may be a bracket, and the first base member may be a temple, in contrast to the above embodiments.
And, obviously, a method of arrangement, such as attaching the second base member to a bracket and attaching the first base member to a temple, is also possible.

The shape of the pillar member is not particularly limited, either, and, though it is the cylindrical pillar shape in the above embodiments, it may be a rectangular column shape.
The pillar member is disposed in parallel with an end face of each base member in the above respective embodiments, but, even if the pillar member is set oblique, a spring effect of the pillar member is not damaged.

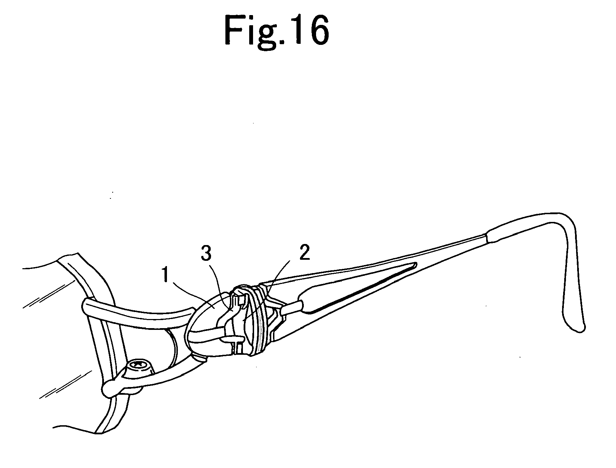

Further, as shown in FIG. 16, even if the pillar member is curved, its spring effect is not lost.
Note that, when the pillar member 3 shown in FIG. 16 undergoes twisting deformation, a portion between the first fixed portion and the second fixed portion is twisted to generate a restoring force.

### Industrial Applicability

Eyeglasses of the present invention are reduced as little as possible in pivotal resistance even for long-term use, and they utilize twisting deformation within the elastic limit.
The present invention is widely applicable to a component in fields other than the eyeglasses, as long as this principle is applied.

### Description of the References

- A:: Pivot structure
- 1 (1A):: First base member
- 11:: Through-hole
- 12:: Stopper portion
- 13:: Protrusion
- 14:: Cylindrical sleeve
- 2(2A):: Second base member
- 3:: Pillar member
- 4:: First fixed portion
- 5:: Second fixed portion
- 6:: Protruded portion
- A (A0, A1, A2):: Pivot structure
- H:: Small opening
- P:: Recess
- S:: Notched portion

## Claims

1. A pivot structure A (A0, A1, A2) in eyeglasses, comprising a first base member 1 (1A), a second base member 2 (2A), and a pillar member 3 interposed between the first base member 1 (1A) and the second base member 2 (2A), wherein a twisting action of the pillar member 3 makes the second base member 2 (2A) capable of pivoting on the first base member 1 (1A).

2. The pivot structure A (A0, A1, A2) according to claim 1, wherein the pillar member 3 and the first base member 1 (1A) are fixed by a first fixed portion 4, the pillar member 3 and the second base member 2 (2A) are fixed by a second fixed portion 5, and a certain distance in the direction of the pillar axis is placed between the first fixed portion 4 and the second fixed portion 5.

3. The pivot structure A (A0, A1, A2) according to claim 2, wherein a plurality of the first fixed portions 4 are formed, and the second fixed portion 5 is formed between the first fixed portion 4 and the first fixed portion 4.

4. The pivot structure A (A0, A1, A2) according to claim 1, wherein the first fixed 4 portion or the second fixed portion 5 is fixed to the pillar member 3 by a securing part.

5. The pivot structure A (A0, A1, A2) according to claim 1, wherein the pillar member 3 is inserted in the first base member 1 (1A), the second base member 2 (2A) is fixed to one end face of the pillar member 3, one end of a stopper portion 12 is fixed to the other end face of the pillar member 3, and the other end of the stopper portion 12 is capable of abutting on a protrusion 13 formed on the first base member 1(1A).

6. The pivot structure A (A0, A1, A2) according to claim 3, wherein the pillar member 3 is curved.

7. The pivot structure A (A0, A1, A2) according to claim 1, wherein the pillar member 3 has a cylindrical pillar shape.

8. The pivot structure A (A0, A1, A2) according to claim 1, wherein the first base member 1 (1A) is a bracket, and the second base member 2 (2A) is a temple.

9. The pivot structure A (A0, A1, A2) according to claim 1, wherein the pillar member 3 is a metal member.

10. The pivot structure A (A0, A1, A2) according to claim 9, wherein the composition of the metal member includes:
(A) 40 to 75 % by weight of Ti,
(B) 18 to 30 % by weight of Nb,
(C) 10 to 30 % by weight of Zr, and
(D) 0.2 to 3.7 % by weight of at least one metal additive element selected from a group consisting of A1, Sn, In, and Ga.

11. Eyeglasses provided with the pivot structure A (A0, A1, A2) according to any one of claims 1 to 10.

12. Eyeglasses provided with a plurality of the pivot structures A (A0, A1, A2) according to any one of claims 1 to 10.
